# EUROPÄISCHE PATENTSCHRIFT

(11) **EP 2 812 216 B1**
(45) Veröffentlichungstag und Bekanntmachung des Hinweises auf die Patenterteilung: **16.12.2015**
(21) Anmeldenummer: 12810209.2
(22) Anmeldetag: 17.12.2012
(51) Int. Cl.: B60T 8/40, B60T 13/14, B60T 13/16, B60T 13/74

(54) **STEUERVORRICHTUNG UND VERFAHREN ZUM TRANSFERIEREN VON BREMSFLÜSSIGKEIT IN MINDESTENS EINEN RADBREMSZYLINDER EINES BREMSSYSTEMS EINES FAHRZEUGS**
CONTROL DEVICE AND METHOD FOR TRANSFERRING BRAKE FLUID INTO AT LEAST ONE WHEEL BRAKE CYLINDER OF A VEHICLE BRAKE SYSTEM
DISPOSITIF DE COMMANDE ET PROCÉDÉ POUR TRANSFÉRER DU LIQUIDE DE FREIN DANS AU MOINS UN CYLINDRE DE FREIN DE ROUE DU SYSTÈME DE FREINAGE D'UN VÉHICULE

(30) Priorität: 10.02.2012 DE 102012202006
(43) Veröffentlichungstag der Anmeldung: 17.12.2014
(73) Patentinhaber: Robert Bosch GmbH, 70442 Stuttgart (DE)
(72) Erfinder: MAYER, Jochen, 89537 Giengen An Der Brenz (DE)
(86) Internationale Anmeldenummer: PCT/EP2012/075791
(87) Internationale Veröffentlichungsnummer: WO 2013/117280

(56) Entgegenhaltungen:
- DE-A1- 19 503 622
- DE-A1- 19 622 726
- DE-A1-102010 002 280
- DE-A1-102010 030 321

## Beschreibung

Die Erfindung betrifft ein Verfahren zum Transferieren von Bremsflüssigkeit in mindestens einen Radbremszylinder eines Bremssystems eines Fahrzeugs. Des Weiteren betrifft die Erfindung eine entsprechende Steuervorrichtung für ein Bremssystem eines Fahrzeugs.

### Stand der Technik

Aus dem Stand der Technik sind Bremskraftverstärker, wie beispielsweise der in der DE 103 27 553 A1 beschriebene elektromechanische Bremskraftverstärker, bekannt.

Die Offenlegungsschrift DE 195 03 622 A1 offenbart eine Bremsanlage mit einem Hauptbremszylinder, mit mindestens einem Radbremszylinder, dem ein Einlaßventil sowie ein Auslaßventil zugeordnet sind und mit einer Rückförderpumpe, mit welcher aus einem Radbremszylinder durch das Auslaßventil ausgeströmte Bremsflüssigkeit dem Radbremszylinder wieder zugeführt werden kann. Insbesondere bei niedrigen Temperaturen erfolgt der Bremsflüssigkeitsdruckaufbau mittels der Rückförderpumpe aufgrund der Zähflüssigkeit der Bremsflüssigkeit zu langsam, um eine Fahrdynamikregelung durchführen zu können. Aus diesem Grund schlägt die Erfindung einen Hauptbremszylindermotor zum Betätigen des Hauptbremszylinders unabhängig von einem Bremspedal sowie eine Verbindung einer Einlaßseite der Rückförderpumpe mit dem Hauptbremszylinder über ein zweites Absperrventil vor. Die Rückförderpumpe kann dadurch mit Bremsflüssigkeit unter Druck beaufschlagt werden, was den Druckaufbau erheblich beschleunigt und die Rückförderpumpe entlastet.

### Offenbarung der Erfindung

Die Erfindung betrifft ein Verfahren zum Transferieren von Bremsflüssigkeit in mindestens einen Radbremszylinder eines Bremssystems eines Fahrzeugs mit den Merkmalen des Anspruchs 1, ein Verfahren zum Steigern eines Bremsdrucks in mindestens einem Radbremszylinder eines Bremssystems eines Fahrzeugs mit den Merkmalen des Anspruchs 4, ein Verfahren zum Betreiben eines Bremssystems eines Fahrzeugs mit den Merkmalen des Anspruchs 5, eine Steuervorrichtung für ein Bremssystem eines Fahrzeugs mit den Merkmalen des Anspruchs 6 und ein Bremssystem für ein Fahrzeug mit den Merkmalen des Anspruchs 12.

### Vorteile der Erfindung

Mittels der vorliegenden Erfindung ist es jederzeit während einer Fahrt eines damit ausgestatteten Fahrzeugs möglich, den Vordruck so anzupassen, dass mittels einer Pumpe, welche über ein Hochdruckschaltventil mit einem Hauptbremszylinder eines Bremssystems des Fahrzeugs verbunden ist, zusätzliche Bremsflüssigkeit in den mindestens einen Radbremszylinder pumpbar ist. Somit kann unabhängig von einem aktuellen Betriebszustand des Bremssystems jederzeit mittels der Pumpe ein Bremsdruck in dem mindestens einen Radbremszylinder erhöht werden. Insbesondere sofern der Fahrer eine starke Bremsleistung anfordert, kann somit unter zusätzlichem Einsatz der Pumpe ein schnelleres Abbremsen des Fahrzeugs verlässlich gewährleistet werden. Die vorliegende Erfindung gewährleistet somit einen verbesserten Bremskomfort für den Fahrer des damit ausgestatteten Fahrzeugs.

Vorteilhafte Weiterbildungen der vorliegenden Erfindung sind in den Unteransprüchen beschrieben.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: schematische Darstellungen eines Bremssystems zum Erläutern einer Ausführungsform des Verfahrens zum Transferieren von Bremsflüssigkeit in mindestens einen Radbremszylinder; und
- Fig. 2: eine schematische Darstellung einer Ausführungsform der Steuervorrichtung.

### Ausführungsformen der Erfindung

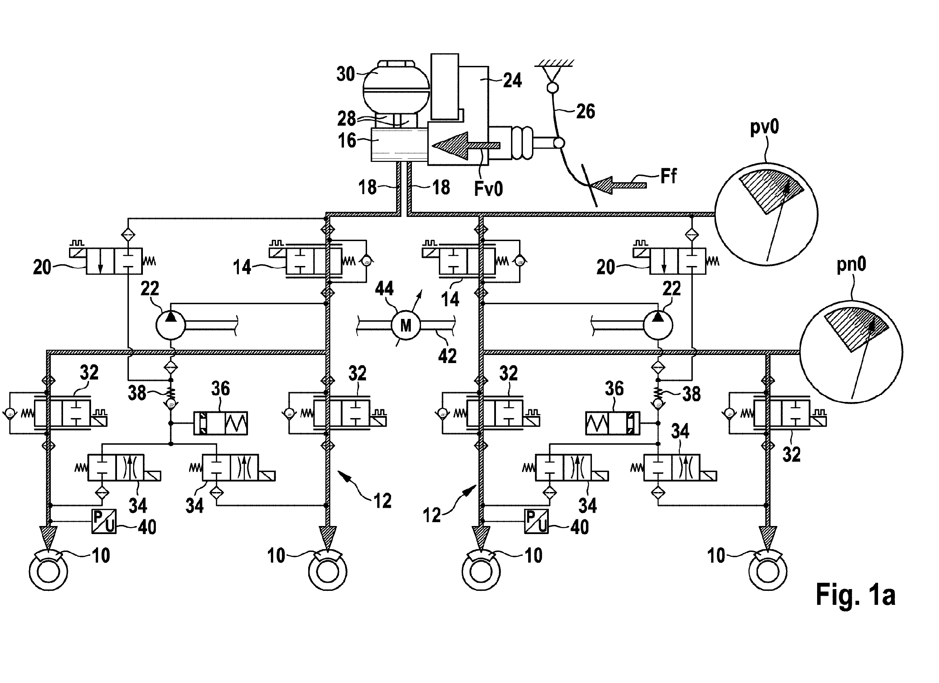

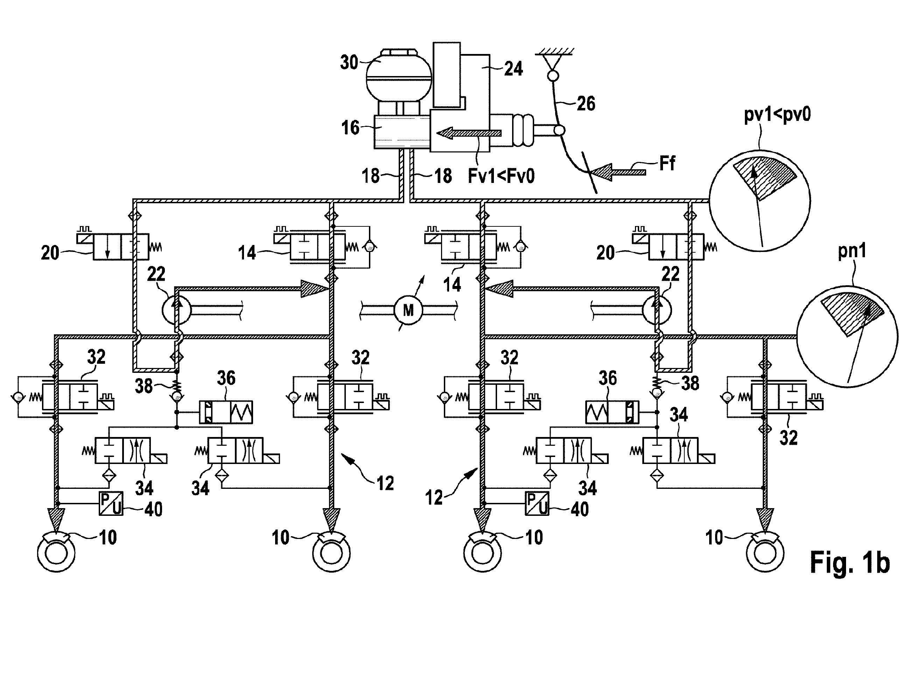

Fig. 1 a und 1 b zeigen schematische Darstellungen eines Bremssystems zum Erläutern einer Ausführungsform des Verfahrens zum Transferieren von Bremsflüssigkeit in mindestens einen Radbremszylinder.

Das im Weiteren beschriebene Verfahren ist ausführbar unter Verwendung eines Bremssystems eines Fahrzeugs, welches mindestens einen Radbremszylinder 10 aufweist. Der mindestens eine Radbremszylinder 10 kann beispielsweise eine Radbremszange sein. Die Ausbildbarkeit des mindestens einen Radbremszylinders 10 ist jedoch nicht auf eine Radbremszange oder einen bestimmten Radbremszylindertyp limitiert. Der mindestens eine Radbremszylinder 10 ist in mindestens einen Bremskreis 12 eingebunden, welcher über jeweils ein Umschaltventil 14 mit einem Hauptbremszylinder 16 des Bremssystems verbunden ist. Beispielsweise ist jeweils eine Zufuhrleitung 18 zwischen dem Hauptbremszylinder 16 und dem mindestens einen Umschaltventil 14 (als Bestandteil des mindestens einen Bremskreises 12) angeordnet. Außerdem ist mindestens ein Hochdruckschaltventil 20 des mindestens einen Bremskreises 12 direkt oder indirekt (über die Zufuhrleitung 18) an den Hauptbremszylinder 16 angebunden. Man kann dies auch so umschreiben, dass der mindestens eine Bremskreis 12 auch über das mindestens eine Hochdruckschaltventil 20 mit dem Hauptbremszylinder 16 verbunden ist. (Unter der Anbindung eines Bremskreises 12 an den Hauptbremszylinder 16 über ein Umschaltventil 14 und über ein Hochdruckschaltventil 20 kann somit auch verstanden werden, dass die Ventile 14 und 20 Komponenten des Bremskreises 12 sind.)

Zum Ausführen des im Weiteren beschriebenen Verfahrens weist das Bremssystem auch mindestens eine Pumpe 22 auf, deren Saugseite zu dem mindestens einen Hochdruckschaltventil 20 zugewandt ist und mittels welcher Bremsflüssigkeit in Richtung zu dem mindestens einen Radbremszylinder 10 pumpbar ist. Ebenso weist ein zum Ausführen des Verfahrens geeignetes Bremssystem einen Bremskraftverstärker 24 auf, mittels welchem eine Verstärkerkraft Fv0 auf mindestens einen verstellbaren Kolben des Hauptbremszylinders 16 ausübbar ist. Optionaler Weise kann die Verstärkerkraft Fv0 zusätzlich zu einer Fahrerbremskraft Ff, welche auf ein an dem Bremskraftverstärker 24 angeordnetes Bremsbetätigungselement 26, wie beispielsweise ein Bremspedal, ausgeübt wird, auf den mindestens einen verstellbaren Kolben des Hauptbremszylinders 16 übertragbar sein.

In den Fig. 1 a und 1 b ist der Bremskraftverstärker 24 als elektromechanischer Bremskraftverstärker ausgebildet. Es wird jedoch darauf hingewiesen, dass die Ausführbarkeit des im Weiteren beschriebenen Verfahrens nicht auf die Verwendung eines elektromechanischen Bremskraftverstärkers limitiert ist. Stattdessen kann jeder Typ eines Bremskraftverstärkers 24, welcher in Abhängigkeit von einem oder mehreren Signalen seine Verstärkungskraft Fv0 erhöhen oder reduzieren kann, zum Ausführen des erfindungsgemäßen Verfahrens genutzt werden.

Es wird auch darauf hingewiesen, dass die Ausführbarkeit des im Weiteren beschriebenen Verfahrens nicht auf den in den Fig. 1 a und 1 b dargestellten Bremssystemaufbau und die darin wiedergegebenen Bremssystemkomponenten limitiert ist. Beispielsweise ist die Ausbildung des Hauptbremszylinders 14 als Tandem-Hauptbremszylinder, welcher über zwei Schnüffelbohrungen 28 mit einem Bremsflüssigkeitsreservoir 30 verbunden ist, lediglich beispielhaft zu interpretieren. Auch die Ausstattung eines Bremskreises 12 mit mindestens einem Radeinlassventil 32 und/oder mindestens einem Radauslassventil 34, welche speziell einem Radbremszylinder 10 zugeordnet sein können, ist lediglich optional und keine Voraussetzung für die Ausführbarkeit des im Weiteren beschriebenen Verfahrens. Außerdem werden die in Fig. 1a und 1b dargestellten Speicherkammern 36, Rückschlagventile 38 und Drucksensoren 40 nicht zum Ausführen des nachfolgend beschriebenen Verfahrens benötigt.

Sofern das Verfahren mittels eines Bremssystems mit zwei Bremskreisen 12 ausgeführt wird, kann jeder der Bremskreise 12 eine eigene Pumpe 22 aufweisen, wobei die zwei Pumpen auf einer gemeinsamen Welle 42 eines Motors 44 angeordnet werden können. Dies ist jedoch keine Voraussetzung für die Ausführbarkeit des Verfahrens. Außerdem können zwei den beiden Radbremszylindern 10 eines Bremskreises 12 zugeordnete Räder sowohl an einer gemeinsamen Fahrzeugachse, als auch an einer Seite des Fahrzeugs oder diagonal am Fahrzeug angeordnet sein. Das im Weiteren beschriebene Verfahren ist sowohl bei einem Bremssystem mit einer parallelen Bremskreisausbildung als auch bei einem Bremssystem mit einer X-Bremskreisausbildung anwendbar.

Fig. 1 a gibt eine mögliche Ausgangssituation wieder, in welcher das Verfahren zum Transferieren von Bremsflüssigkeit in mindestens einen Radbremszylinder 10 ausführbar ist. Bei dem in Fig. 1 a wiedergegebenen Bremssystem tritt der Fahrer mit einer vergleichsweise großen Fahrerbremskraft Ff auf das als Bremspedal ausgebildete Bremsbetätigungselement 26. Um den Fahrer kraftmäßig beim Abbremsen seines Fahrzeugs zu unterstützen, wird eine relativ große Verstärkerkraft Fv0 mittels des Bremskraftverstärkers 24 zusätzlich auf den mindestens einen verstellbaren Kolben des Hauptbremszylinders 16 übertragen. Somit baut sich in den zwei Bremskreisen 12 ein vergleichsweise großer Druck auf. Dies ist so umschreibbar, dass ein zwischen dem Hauptbremszylinder 16, einem Umschaltventil 14 eines Bremskreises 12 und einem Hochdruckschaltventil 20 des gleichen Bremskreises 12 vorliegender Vordruck pv0 vergleichsweise groß ist. (Der Vordruck pv0 liegt beispielsweise über 100 bar, insbesondere über 120 bar, speziell über 140 bar.) Ebenso ist ein Nachdruck pn eines Bremskreises 12, welcher zwischen dem Umschaltventil 14 und den beiden Radbremszylindern 10 des Bremskreises 12 vorliegt, relativ hoch.

Herkömmlicherweise empfinden viele Bremssystembenutzer die in Fig. 1a wiedergegebene Bremssituation als unvorteilhaft, da eine Pumpe 22 eines Bremskreises 12 manchmal aufgrund des vergleichsweise großen Vordrucks pv0 kaum/keine Bremsflüssigkeit über das zugeordnete Hochdruckschaltventil 20 mehr ansaugen kann. In diesem Fall können die Pumpen 22 nicht zu einem zusätzlichen Bremsdruckaufbau in dem angebundenen Radbremszylindern 10 beim Stand der Technik eingesetzt werden. In vielen herkömmlichen Bremssystemen ist ein Betrieb der mindestens einen Pumpe 22 bei einem Vordruck pv0 über einem Grenz-Vordruck auch mit einem erhöhten Beschädigungsrisiko der mindestens einen Pumpe 22 verbunden. Insbesondere kann bei einem herkömmlichen Bremssystem, wie beispielsweise einem standardgemäßen ESP-Bremssystem, ein Einsetzen der Pumpen 22 zum aktiven Druckaufbau in den mindestens einen angebundenen Radbremszylinder 10 bei einem Grenz-Vordruck von ca. 140 bar kaum/nicht mehr durchgeführt werden, ohne dass die mindestens eine Pumpe 22 mit einer hohen Wahrscheinlichkeit beschädigt wird. Bei einem herkömmlichen ESP-Bremssystem wird deshalb in der Regel bereits ab einem Vordruck pv0 von ca. 140 bar kein aktiver Druckaufbau mehr ausgeführt.

Mittels des nachfolgend beschriebenen Verfahrens ist auch bei einer Ausgangssituation, wie sie in Fig. 1 a wiedergegeben ist, ein aktiver Druckaufbau noch verlässlich ausführbar, selbst wenn bereits ein Vordruck pv0 von 140 bar oder mehr vorliegt. Außerdem ist der aktive Druckaufbau bei gleichzeitiger Schonung der mindestens einen Pumpe 22 möglich:
Dazu wird das mindestens eine Umschaltventil 14, über welches der mindestens eine Bremskreis 12 mit dem mindestens einen Radbremszylinder 10 mit dem Hauptbremszylinder 16 verbunden ist, in einen geschlossenen Zustand gesteuert. Nach dem Steuern des mindestens einen Umschaltventils 14 in den geschlossenen Zustand wird eine zuvor ausgeübte Verstärkerkraft Fv0 des Bremskraftverstärkers 24, welche auf den mindestens einen verstellbaren Kolben des Hauptbremszylinders 16 ausgeübt wird, reduziert. (Dies ist in Fig. 1b dargestellt.) Die mittels des Bremskraftverstärkers 24 danach/aktuell ausgeübte Verstärkerkraft Fv1 liegt somit unter der zuvor ausgeübten Verstärkerkraft Fv0. Somit wird, auch falls die Fahrerbremskraft Ff konstant bleibt, eine geringere Kraft auf den mindestens einen verstellbaren Kolben des Hauptbremszylinders 16 ausgeübt. Dies bewirkt eine Abnahme des nach der Verstärkerkraftreduzierung vorliegenden Vordrucks pv1 gegenüber dem zuvorigen Vordruck pv0.

Aufgrund des in den geschlossenen Zustand gesteuerten mindestens einen Umschaltventils 14 kann jedoch der Nachdruck pn auch nach der Verstärkerkraftreduzierung trotz der Abnahme des aktuellen Vordrucks pv1 (nahezu) konstant gehalten werden. Die mittels der hier beschriebenen Verfahrensschritte bewirkte Reduzierung des aktuellen Vordrucks pv1 führt somit nicht zu einem kleineren Nachdruck pn, bzw. einem Bremsdruckabbau in dem mindestens einen Radbremszylinder 10. Somit wird trotz der Reduzierung des Vordrucks pv1 gegenüber dem zuvorigen Vordruck pv0 die von dem Fahrer mittels der Fahrerbremskraft Ff und mittels der zuvor ausgeübten Verstärkerkraft Fv0 aufgebaute Bremswirkung des mindestens einen Radbremszylinders 10 verlässlich beibehalten.

In einem weiteren Verfahrensschritt, welcher nach dem Reduzieren der zuvor ausgeübten Verstärkerkraft Fv0 auf die aktuell ausgeführte Verstärkerkraft Fv1 ausgeführt wird, wird das mindestens eine Hochdruckschaltventil 20, über welches der mindestens eine Bremskreis 12 (mit dem mindestens einen Radbremszylinder 10) mit dem Hauptbremszylinder 16 verbunden ist, in einen zumindest teilgeöffneten Zustand gesteuert. Bevorzugter Weise wird das mindestens eine Hochdruckschaltventil 20 in den (vollständig) geöffneten Zustand gesteuert.

Über das zumindest teilgeöffnete mindestens eine Hochdruckschaltventil 20 kann somit Bremsflüssigkeit mittels der mindestens einen Pumpe 22 (aus dem Hauptbremszylinder 16 und/oder dem Bremsflüssigkeitsreservoir 30) angesaugt und in den jeweils angebundenen mindestens einen Radbremszylinder 10 gepumpt werden. Somit kann der Nachdruck pn durch Einsetzen der mindestens einen Pumpe 22 zusätzlich gesteigert werden. Durch das zusätzliche Befüllen des mindestens einen Radbremszylinders 10 kann insbesondere auch der darin vorliegende Bremsdruck zusätzlich gesteigert werden. Auf diese Weise ist ein schnelleres Abbremsen des Fahrzeugs erreichbar. Das oben beschriebene Verfahren führt somit zu einem verbesserten Bremskomfort für den Fahrer.

Bevorzugter Weise wird die mittels der mindestens einen Pumpe 22 in Richtung zu dem mindestens einen Radbremszylinder 12 gepumpte Flüssigkeitsmenge, bzw. die Pumpleistung der mindestens einen Pumpe 22, unter Berücksichtigung des Fahrerbremswunschs, einer Verkehrssituation und/oder einer Zustandsinformation bezüglich eines Zustands mindestens einer Komponente des Bremssystems festgelegt. Mittels des Betriebs der mindestens einen Pumpe 22 kann somit über dem vorher eingestellten Bremsdruck, welcher auf die Fahrerbremskraft Ff und die zuvor eingestellte Verstärkerkraft Fv0 zurückführbar ist, eine weitere Bremsdrucksteigerung ausgeführt werden.

Das oben beschriebene Verfahren gewährleistet durch die vorteilhafte Reduzierung des nach der Verstärkerkraftreduzierung vorliegenden Vordrucks pv1 vor dem Aktivieren der mindestens einen Pumpe 22 auch einen verbesserten Schutz der Pumpe 22. Insbesondere kann auf diese Weise trotz eines ausgeführten aktiven Druckaufbaus eine Beschädigung der betriebenen Pumpe 22 verlässlich verhindert werden. Die vorliegende Erfindung kann somit auch dazu beitragen, Ersatzteilkosten und einen Werkstattbesuch unnötig zu machen.

Es wird darauf hingewiesen, dass das vorteilhafte Verfahren unter Verwendung einer einfachen und kostengünstigen Pumpe 22 eines ESP-Bremssystems ausführbar ist. Somit muss zum Ausführen des vorteilhaften Verfahrens keine zusätzliche oder teure Komponente an einem fahrzeugeigenen Bremssystem eingebaut werden.

In einer vorteilhaften Weiterbildung des Verfahrens kann die Verstärkerkraft Fv1 des Bremskraftverstärkers 24 nach dem Pumpen von Bremsflüssigkeit in die mindestens eine Radbremszange 10 wieder gesteigert werden. Beispielsweise wird die Verstärkerkraft Fv1 wieder auf den zuvorigen Wert Fv0 eingestellt. Anschließend kann das mindestens eine Umschaltventil 14 zumindest teilweise wieder geöffnet werden. Auf diese Weise ist ein vorteilhaftes/standardgemäßes Pedalgefühl für den Fahrer wieder einstellbar.

Das in den vorausgehenden Absätzen beschriebene Verfahren kann auch für ein Verfahren zum Steigern eines Bremsdrucks in mindestens einem Radbremszylinder eines Bremssystems eines Fahrzeugs genutzt werden. Bei diesem Verfahren wird, vorzugsweise nach einem Festlegen einer Soll-Bremsdrucksteigerung ungleich Null, mindestens eine Vordruckgröße bezüglich eines zumindest zwischen dem mindestens einen Hochdruckschaltventil 20 und dem Hauptbremszylinder 16 des Bremssystems vorliegenden Vordrucks pv0 ermittelt. Anschließend wird die mindestens eine Vordruckgröße mit mindestens einem Grenzwert verglichen. Sofern die mindestens eine Vordruckgröße über dem mindestens einen Grenzwert liegt, wird der Bremsdruck in dem mindestens einen Radbremszylinder 10 gesteigert durch Transferieren von Flüssigkeit in den mindestens einen Radbremszylinder gemäß einer Ausführungsform des oben beschriebenen Verfahrens.

Ergänzend kann diese Vorgehensweise auch für ein Verfahren zum Betreiben eines Bremssystems eines Fahrzeugs angewandt werden. Bei dem Verfahren zum Betreiben eines Bremssystems eines Fahrzeugs werden eine Temperaturgröße und/oder eine temperaturbeeinflussende Modellgröße bezüglich einer an oder in mindestens einem Radbremszylinder 10 des Bremssystems vorliegenden Temperatur ermittelt. Anstelle eines direkten Messens der betreffenden Temperatur kann auch eine temperaturbeeinflussende Modellgröße, wie beispielsweise eine Größe bezüglich des Bremsverhaltens, der Bremsdauer und/oder der Bremsintensität ermittelt werden.

Die ermittelte Temperaturgröße wird anschließend mit einer Vergleichsgröße verglichen. Sofern die ermittelte Temperaturgröße über der Vergleichsgröße liegt, erfolgt ein Steigern eines Bremsdrucks (gemäß einer festgelegten Soll-Bremsdrucksteigerung) in dem mindestens einen Radbremszylinder 10 gemäß der zuvor beschriebenen Vorgehensweise. Somit kann insbesondere bei Fading auch bei einem vergleichsweise großem Vordruck pv0 eine Erhöhung des Bremsdrucks in dem mindestens einen Radbremszylinder 10 mittels der Pumpe 22 ausgeführt werden. Fading bedeutet, dass der Reibwert der Bremsanlage aufgrund einer hohen Temperatur abgesenkt ist. Somit ist bei Fading, welches vor allem bei einer hohen Temperatur an dem mindestens einen Radbremszylinder 10 auftritt, ein relativ hoher Bremsdruck vorteilhaft, um ein verlässliches Verzögern des Fahrzeugs zu bewirken. Mittels des hier beschriebenen Verfahrens zum Betreiben eines Bremssystems eines Fahrzeugs kann jedoch das mögliche Vorliegen von Fading mit einer hohen Wahrscheinlichkeit festgelegt/festgestellt und anschließend selbst bei einem vergleichsweise großem Vordruck pv0 ein aktiver Bremsdruckaufbau mittels der mindestens einen Pumpe 22 noch bewirkt werden. Somit kann einem möglichen Fading entgegen gewirkt werden.

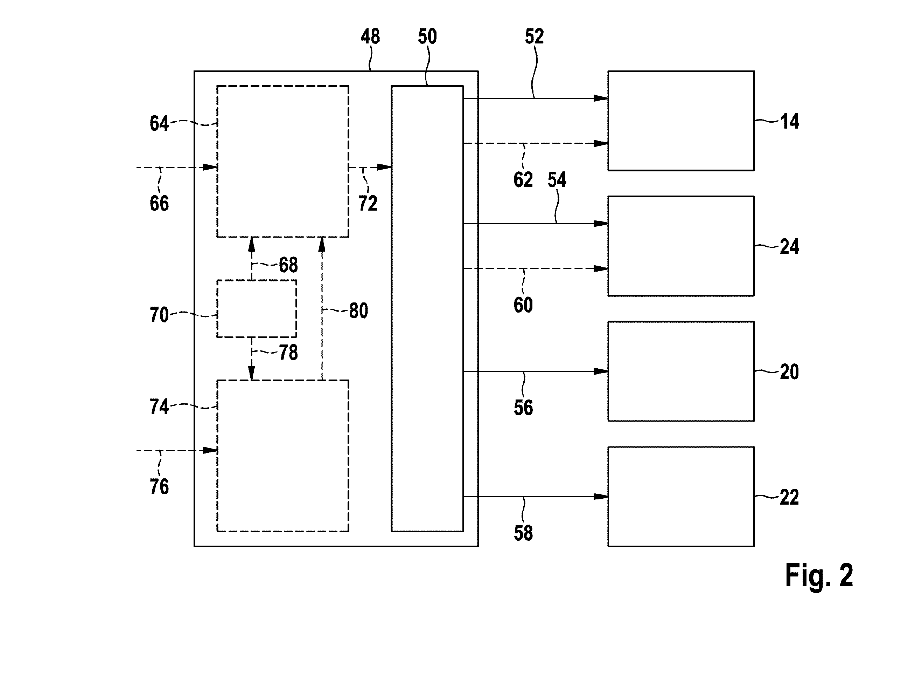

Fig. 2 zeigt eine schematische Darstellung einer Ausführungsform der Steuervorrichtung.

Die in Fig. 2 schematisch dargestellte Steuervorrichtung 48 ist für ein Einsetzen zusammen mit einem Bremssystem eines Fahrzeugs ausgelegt. Die Steuervorrichtung 48 kann insbesondere eine Untereinheit des Bremssystems sein. Ebenso kann die Steuervorrichtung 48 als ESP-Steuergerät, als Bremskraftverstärker-Steuerelektronik, beispielsweise als Untereinheit des Bremskraftverstärkers 24, als Chassis-Kontrollgerät (Chassis-Controller) und/oder als zentrales Fahrzeugsteuersystem ausgebildet sein. Die Ausbildbarkeit der Steuervorrichtung 48 ist jedoch nicht auf die hier genannten Beispiele limitiert.

Die in Fig. 2 schematisch wiedergegebene Steuervorrichtung 48 weist eine Bremsdrucksteuereinrichtung 50 auf, mittels welcher zumindest bei einem Vorliegen der Bremsdrucksteuereinrichtung 50 in einem ersten Drucksteigermodus mindestens ein Schließsignal 52 an mindestens ein Umschaltventil 14 des Bremssystems ausgebbar ist. Mittels des mindestens einen Schließsignals 52 ist das mindestens eine Umschaltventil 14 des mit der Steuervorrichtung 48 zusammenwirkenden Bremssystems in einen geschlossenen Zustand steuerbar. Nach dem Ausgeben des mindestens einen Schließsignals 52 (an das mindestens eine Umschaltventil 14) ist mittels der Bremsdrucksteuereinrichtung 50 mindestens ein Verstärkerkraft-Reduziersignal 54 an einen Bremskraftverstärker 24 des Bremssystems ausgebbar. Durch das mindestens eine Verstärkerkraft-Reduziersignal 54 wird der Bremskraftverstärker 24 so angesteuert, dass eine auf mindestens einen verstellbaren Kolben des Hauptbremszylinders des mit der Steuervorrichtung 48 zusammenwirken Bremssystems ausgeübte Verstärkerkraft reduziert wird. Die mittels der Bremsdrucksteuereinrichtung 50 ausgebbaren Signale 52 und 54 bewirken somit das oben schon beschriebene vorteilhafte Reduzieren eines Vordrucks.

Nach dem Ausgeben des Verstärkerkraft-Reduziersignals 54 (an den Bremskraftverstärker 24) ist mittels der Bremsdrucksteuereinrichtung 50 auch zumindest ein (Teil-)Öffnungssteuersignal 56 an mindestens ein Hochdruckschaltventil 20 des Bremssystems ausgebbar. Durch das Ausgeben des mindestens einen (Teil-) Öffnungssteuersignals 56 ist das mindestens eine Hochdruckschaltventil 20 in einen zumindest teilgeöffneten Zustand, vorzugsweise in einen (vollständig) geöffneten Zustand, steuerbar.

Nach dem Ausgeben zumindest des einen (Teil-)Öffnungssteuersignals 56 (an das mindestens eine Hochdruckschaltventil 20) ist mittels der Bremsdrucksteuereinrichtung 50 noch mindestens ein Aktivierungssignal 58 so an mindestens eine Pumpe 22 des Bremssystems ausgebbar, dass mittels der mindestens einen Pumpe 22 Bremsflüssigkeit über das zumindest teilweise geöffnete mindestens eine Hochdruckschaltventil 20 ansaugbar und in mindestens einen Radbremszylinder des Bremssystems pumpbar ist. Vorteilhafterweise kann mittels des mindestens einen Aktivierungssignals 58 die mindestens eine Pumpe 22 so ansteuerbar sein, dass eine Pumpleistung/eine gepumpte Bremsflüssigkeitsmenge zu einer aktuell ausgeübten Fahrerbremskraft, einer Verkehrssituation und/oder einem Zustand mindestens einer Bremssystemkomponente, wie beispielsweise einem Fading an einem Radbremszylinder, korrespondiert. Somit kann mittels der Signale 56 und 58 ein aktiver Bremsdruckaufbau ausgeführt werden, mittels welchem ein in dem mindestens einen Radbremszylinder vorliegender Bremsdruck vorteilhaft steigerbar ist.

In einer vorteilhaften Weiterbildung ist die Bremsdrucksteuereinrichtung 50 zusätzlich dazu ausgelegt, nach dem Pumpen 22 von Bremsflüssigkeit in den mindestens einen Radbremszylinder mittels eines optionalen Verstärkerkraft-Steigersignals 60 die Verstärkerkraft des Bremskraftverstärkers 24 zu steigern. Die Reduzierung der Verstärkerkraft ist somit auf ein Zeitintervall beschränkbar, welches so kurz ist, dass der Fahrer die geänderte Verstärkerkraft nicht/kaum während einer Betätigung des Bremsbetätigungselements wahrnimmt. Der Fahrer hat somit trotz des zwischenzeitlichen Reduzierens des Vordrucks ein standardgemäßes Bremsbetätigungsgefühl (Pedalgefühl).

Des Weiteren kann die Bremsdrucksteuereinrichtung 50 zusätzlich dazu ausgelegt sein, nach dem Steigern der Verstärkerkraft des Bremskraftverstärkers 24 (mittels des Verstärkerkraft-Steigersignals 60) das mindestens eine Umschaltventil 14 mittels eines weiteren Teil-Öffnungssteuersignals 62 zumindest teilweise offen zu steuern. Der Fahrer kann somit auch nach dem Ausführen der vorteilhaften Funktion zum aktiven Druckaufbau noch direkt in den mindestens einen Radbremszylinder hineinbremsen.

In einer vorteilhaften Weiterbildung weist die Steuervorrichtung 48 zusätzlich eine Vordruckauswerteeinrichtung 64 auf, mittels welcher (zumindest vor einem mittels der Bremsdrucksteuereinrichtung 50 ausgeführten aktiven Druckaufbau) mindestens eine bereitgestellte Vordruckgröße 66 bezüglich eines zumindest zwischen einem Umschaltventil 14, einem Hochdruckschaltventil 20 und einem Hauptbremszylinder des Bremssystems vorliegenden Vordrucks mit mindestens einem (vorgegebenen) Grenzwert 68 vergleichbar ist. Der mindestens eine Grenzwert 68 kann beispielsweise von einer internen Speichereinheit 70 bereitgestellt sein. Sofern die mindestens eine Vordruckgröße 66 über dem mindestens einen Grenzwert 68 liegt, ist die Vordruckauswerteeinrichtung 64 vorzugsweise dazu ausgelegt, die Bremsdrucksteuereinrichtung 50 mittels eines Schaltsignals 72 aus mindestens einem zweiten Drucksteigermodus in den ersten Drucksteigermodus zu steuern.

Beispielsweise kann die Vordruckauswerteeinrichtung 64 in den zweiten Drucksteigermodus dazu ausgelegt sein, einen aktiven Bremsdruckaufbau ohne eine zwischenzeitliche Reduzierung des Vordrucks auszuführen. Demgegenüber ist die Bremsdrucksteuereinrichtung 50 in dem ersten Drucksteigermodus dazu ausgelegt, vor dem aktiven Bremsdruckaufbau den Vordruck zumindest zeitweise zu reduzieren. Durch das Zusammenwirken der Bremsdrucksteuereinrichtung 50 mit der Vordruckauswerteeinrichtung 64 kann somit sichergestellt werden, dass eine Reduzierung des Vordrucks nur dann erfolgt, sofern der Vordruck bei einem vergleichsweise großen Wert liegt, welcher das Einsetzen mindestens einer Pumpe 22 für einen aktiven Druckaufbau erschwert, bzw. ein hohes Beschädigungsrisiko für die mindestens eine zum aktiven Druckaufbau eingesetzte Pumpe 22 bedeutet.

In einer weiteren vorteilhaften Weiterbildung hat die Steuervorrichtung 48 auch eine Temperaturauswerteeinrichtung 74. Die Temperaturauswerteeinrichtung 74 ist vorzugsweise so ausgelegt, dass mittels ihr eine bereitgestellte Temperaturgröße 76 und/oder eine bereitgestellte temperaturbeeinflussende Modellgröße bezüglich einer an oder in mindestens einem Radbremszylinder des Bremssystems vorliegenden Temperatur mit mindestens einer (vorgegebenen) Vergleichsgröße 78 vergleichbar ist. Auch die mindestens eine Vergleichsgröße 78 kann mittels der internen Speichereinheit 70 vorgegeben werden. Sofern die Temperaturgröße 76 und/oder die temperaturbeeinflussende Modellgröße über der Vergleichsgröße 78 liegt, ist die Temperaturauswerteeinrichtung 74 vorzugsweise dazu ausgelegt, ein Aktivierungssignal 80 an die Vordruckauswerteeinrichtung 64 auszugeben. Mittels des Aktivierungssignals 80 kann die Vordruckauswerteeinrichtung 64 aus einem inaktiven Modus in einen aktiven Modus gesteuert werden, in welchem die Vordruckauswerteeinrichtung 64 die oben schon beschriebene Funktion eines Vergleichs der Größe 66 mit dem Grenzwert 68 ausführt und die Bremsdrucksteuereinrichtung 50 entsprechend ansteuert. Sofern dies gewünscht wird, kann die vorteilhafte Berücksichtigung des Vordrucks bei einem aktiven Druckaufbau somit nur dann erfolgen, wenn aufgrund eines wahrscheinlichen Fadings an dem mindestens einen Radbremszylinder ein erhöhter Bremsdruck vergleichsweise häufig eingestellt wird.

Die in den oberen Absätzen beschriebenen Vorteile der Steuervorrichtung 48 sind auch bei einem Bremssystem für ein Fahrzeug mit einer derartigen Steuervorrichtung 48 gewährleistet.

## Patentansprüche

1. Verfahren zum Transferieren von Bremsflüssigkeit in mindestens einen Radbremszylinder (10) eines Bremssystems eines Fahrzeugs mit den Schritten:
Steuern mindestens eines Umschaltventils (14), über welches mindestens ein Bremskreis (12) mit dem mindestens einen Radbremszylinder (10) mit einem Hauptbremszylinder (16) des Bremssystems verbunden ist, in einen geschlossenen Zustand;
**gekennzeichnet durch**
Reduzieren einer Verstärkerkraft (Fv0, Fv1) eines Bremskraftverstärkers (24), welche auf mindestens einen verstellbaren Kolben des Hauptbremszylinders (16) ausgeübt wird, nach dem Steuern des mindestens einen Umschaltventils (14) in den geschlossenen Zustand;
Steuern mindestens eines Hochdruckschaltventils (20), über welches der mindestens eine Bremskreis (12) mit dem mindestens einen Radbremszylinder (10) mit dem Hauptbremszylinder (16) verbunden ist, in einen zumindest teilgeöffneten Zustand nach dem Reduzieren der Verstärkerkraft (Fv0, Fv1) des Bremskraftverstärkers (24); und
Ansaugen von Bremsflüssigkeit über das zumindest teilgeöffnete mindestens eine Hochdruckschaltventil (20) und Pumpen der Bremsflüssigkeit in den mindestens einen Radbremszylinder (10).

2. Verfahren nach Anspruch 1, wobei nach dem Pumpen von Bremsflüssigkeit in den mindestens einen Radbremszylinder (10) die Verstärkerkraft (fv0, Fv1) des Bremskraftverstärkers (24) gesteigert wird.

3. Verfahren nach Anspruch 2, wobei nach dem Steigern der Verstärkerkraft (Fv0, Fv1) des Bremskraftverstärkers (24) das mindestens eine Umschaltventil (14) zumindest teilweise geöffnet wird.

4. Verfahren zum Steigern eines Bremsdrucks in mindestens einem Radbremszylinder (10) eines Bremssystems eines Fahrzeugs mit den Schritten:
Ermitteln mindestens einer Vordruckgröße (66) bezüglich eines zumindest zwischen einem Hochdruckschaltventil (20) und einem Hauptbremszylinder (16) des Bremssystems vorliegenden Vordrucks (pv0, pv1);
Vergleichen der mindestens einen Vordruckgröße (66) mit mindestens einem Grenzwert (68); und,
sofern die mindestens eine Vordruckgröße (66) über dem mindestens einen Grenzwert (68) liegt, Steigern des Bremsdrucks in dem mindestens einen Radbremszylinder (10) durch Transferieren von Bremsflüssigkeit in den mindestens einen Radbremszylinder (10) gemäß dem Verfahren nach einem der Ansprüche 1 bis 3.

5. Verfahren zum Betreiben eines Bremssystems eines Fahrzeugs mit den Schritten:
Ermitteln einer Temperaturgröße (76) und/oder einer temperaturbeeinflussenden Modellgröße bezüglich einer an oder in mindestens einem Radbremszylinder (10) des Bremssystems vorliegenden Temperatur;
Vergleichen der ermittelten Temperaturgröße (76) und/oder temperaturbeeinflussenden Modellgröße mit mindestens einer Vergleichsgröße (78); und
sofern die ermittelte Temperaturgröße (76) und/oder temperaturbeeinflussende Modellgröße über der mindestens einen Vergleichsgröße (78) liegt, Steigern eines Bremsdrucks in dem mindestens einen Radbremszylinder (10) gemäß dem Verfahren nach Anspruch 4.

6. Steuervorrichtung (48) für ein Bremssystem eines Fahrzeugs mit:
einer Bremsdrucksteuereinrichtung (50), mittels welcher zumindest bei einem Vorliegen der Bremsdrucksteuereinrichtung (50) in einen ersten Drucksteigermodus mindestens ein Schließsignal (52) an mindestens ein Umschaltventil (14) des Bremssystems ausgebbar ist,
**dadurch gekennzeichnet, dass**
nach dem Ausgeben des mindestens einen Schließsignals (52) an das mindestens eine Umschaltventil (14) mindestens ein Verstärkerkraft-Reduziersignal (54) an einen Bremskraftverstärker (24) des Bremssystems ausgebbar ist, nach dem Ausgeben des Verstärkerkraft-Reduziersignals (54) an den Bremskraftverstärker (24) zumindest ein Teil-Öffnungssteuersignal (56) an mindestens ein Hochdruckschaltventil (20) des Bremssystems ausgebbar ist, und nach dem Ausgeben zumindest des einen Teil-Öffnungssteuersignals (56) an das mindestens eine Hochdruckschaltventil (20) mindestens ein Aktivierungssignal (58) so an mindestens eine Pumpe (22) des Bremssystems ausgebbar ist, dass mittels der mindestens einen Pumpe (22) Bremsflüssigkeit über das zumindest teilweise geöffnete mindestens eine Hochdruckschaltventil (20) ansaugbar und in mindestens einen Radbremszylinder (10) des Bremssystems pumpbar ist.

7. Steuervorrichtung (48) nach Anspruch 6, wobei die Bremsdrucksteuereinrichtung (50) zusätzlich dazu ausgelegt ist, nach dem Pumpen von Bremsflüssigkeit in den mindestens einen Radbremszylinder (10) die Verstärkerkraft (Fv0, Fv1) des Bremskraftverstärkers (24) zu steigern.

8. Steuervorrichtung (48) nach Anspruch 7, wobei die Bremsdrucksteuereinrichtung (50) zusätzlich dazu ausgelegt ist, nach dem Steigern der Verstärkerkraft (Fv0, Fv1) des Bremskraftverstärkers (24) das mindestens eine Umschaltventil (14) zumindest teilweise offen zu steuern.

9. Steuervorrichtung (48) nach einem der Ansprüche 6 bis 8, wobei die Steuervorrichtung (48) zusätzlich eine Vordruckauswerteeinrichtung (64) umfasst, mittels welcher mindestens eine bereitgestellte Vordruckgröße (66) bezüglich eines zumindest zwischen einem Hochdruckschaltventil (20) und einem Hauptbremszylinder (16) des Bremssystems vorliegenden Vordrucks (pv0, pv1) mit mindestens einem Grenzwert (68) vergleichbar ist, und, sofern die mindestens eine Vordruckgröße (66) über dem mindestens einen Grenzwert (68) liegt, die Bremsdrucksteuereinrichtung (50) aus mindestens einem zweiten Drucksteigermodus in den ersten Drucksteigermodus steuerbar ist.

10. Steuervorrichtung (48) nach Anspruch 9, wobei die Steuervorrichtung (48) zusätzlich eine Temperaturauswerteeinrichtung (74) umfasst, mittels welcher eine bereitgestellte Temperaturgröße (76) und/oder eine bereitgestellte temperaturbeeinflussende Modellgröße bezüglich einer an oder in dem mindestens einen Radbremszylinder (10) des Bremssystems vorliegenden Temperatur mit mindestens einer Vergleichsgröße (78) vergleichbar ist, und sofern die Temperaturgröße (76) und/oder die temperaturbeeinflussende Modellgröße über der mindestens einen Vergleichsgröße (78) liegt, ein Aktivierungssignal (80) an die Vordruckauswerteeinrichtung (64) ausgebbar ist.

11. Steuervorrichtung (48) nach einem der Ansprüche 6 bis 10, wobei die Steuervorrichtung (48) als ESP-Steuergerät, als Bremskraftverstärkersteuerelektronik, als Chassis-Kontrollgerät und/oder als zentrales Fahrzeugsteuersystem ausgebildet ist.

12. Bremssystem für ein Fahrzeug mit einer Steuervorrichtung (48) nach einem der Ansprüche 6 bis 11.

## Claims

1. Method for transferring brake fluid into at least one wheel brake cylinder (10) of a vehicle brake system, comprising the steps:
placing at least one switching valve (14), by means of which at least one brake circuit (12) is connected to the at least one wheel brake cylinder (10) with a master brake cylinder (16) of the brake system, in a closed state;
**characterized by**
reducing a booster force (Fv0, Fv1) of a brake booster (24), which booster force (Fv0, Fv1) is applied to at least one adjustable piston of the master brake cylinder (16), after the placing of the at least one switching valve (14) in the closed state;
placing at least one high-pressure switching valve (20), by means of which the at least one brake circuit (12) is connected to the at least one wheel brake cylinder (10) with the master brake cylinder (16), in at least a partially opened state after the reduction of the booster force (Fv0, Fv1) of the brake booster (24); and
sucking in brake fluid via the at least partially opened at least one high-pressure switching valve (20) and pumping the brake fluid into the at least one wheel brake cylinder (10).

2. Method according to Claim 1, wherein after the pumping of brake fluid into the at least one wheel brake cylinder (10) the booster force (Fv0, Fv1) of the brake booster (24) is increased.

3. Method according to Claim 2, wherein after the increasing of the booster force (Fv0, Fv1) of the brake booster (24) the at least one switching valve (14) is at least partially opened.

4. Method for increasing a brake pressure in at least one wheel brake cylinder (10) of a brake system of a vehicle, comprising the steps:
determining at least one admission pressure variable (66) for an admission pressure (pv0, pv1) which is present at least between a high-pressure switching valve (20) and a master brake cylinder (16) of the brake system;
comparing the at least one admission pressure variable (66) with at least one limiting value (68); and
if the at least one admission pressure variable (66) is above the at least one limiting value (68), increasing the brake pressure in the at least one wheel brake cylinder (10) by transferring brake fluid into the at least one wheel brake cylinder (10) in accordance with the method according to one of Claims 1 to 3.

5. Method for operating a brake system of a vehicle, comprising the steps:
determining a temperature variable (76) and/or a temperature-influencing model variable for a temperature which is present at or in at least one wheel brake cylinder (10) of the brake system;
comparing the determined temperature variable (76) and/or temperature-influencing model variable with at least one comparison variable (78); and
if the determined temperature variable (76) and/or temperature-influencing model variable is above the at least one comparison variable (78), increasing a brake pressure in the at least one wheel brake cylinder (10) in accordance with the method according to Claim 4.

6. Control device (48) for a brake system of a vehicle, comprising:
a brake pressure control device (50) by means of which, at least when the brake pressure control device (50) is present in a first pressure increasing mode at least one closing signal (52) can be output to at least one switching valve (14) of the brake system,
**characterized in that**
after the outputting of the at least one closing signal (52) to the at least one switching valve (14) at least one booster force-reducing signal (54) can be output to a brake booster (24) of the brake system, after the outputting of the booster force-reducing signal (54) to the brake booster (24) at least one partial opening control signal (56) can be output to at least one high-pressure switching valve (20) of the brake system, and after the outputting of at least the one partial opening control signal (56) to the at least one high-pressure switching valve (20) at least one activation signal (58) can be output to at least one pump (22) of the brake system in such a way that by means of the at least one pump (22) brake fluid can be sucked in via the at least partially opened at least one high-pressure switching valve (20) and can be pumped into at least one wheel brake cylinder (10) of the brake system.

7. Control device (48) according to Claim 6, wherein the brake pressure control device (50) is additionally configured to increase the booster force (Fv0, Fv1) of the brake booster (24) after the pumping of brake fluid into the at least one wheel brake cylinder (10).

8. Control device (48) according to Claim 7, wherein the brake pressure control device (50) is additionally configured to place the at least one switching valve (14) in the at least partially opened state after the increasing of the booster force (Fv0, Fv1) of the brake booster (24).

9. Control device (48) according to one of Claims 6 to 8, wherein the control device (48) additionally comprises an admission pressure evaluation device (64) by means of which at least one supplied admission pressure variable (66) for an admission pressure (pv0, pv1) which is present at least between a high-pressure switching valve (20) and a master brake cylinder (16) of the brake system can be compared with at least one limiting value (68) and, if the at least one admission pressure variable (66) is above the at least one limiting value (68), the brake pressure control device (50) can be changed from at least a second pressure increasing mode into the first pressure increasing mode.

10. Control device (48) according to Claim 9, wherein the control device (48) additionally comprises a temperature evaluation device (74) by means of which a supplied temperature variable (76) and/or a supplied temperature-influencing model variable for a temperature which is present at or in the at least one wheel brake cylinder (10) of the brake system can be compared with at least one comparison variable (78), and if the temperature variable (76) and/or the temperature-influencing model variable is above the at least one comparison variable (78), an activation signal (80) can be output to the admission pressure evaluation device (64).

11. Control device (48) according to one of Claims 6 to 10, wherein the control device (48) is embodied as an ESP control unit, as a brake booster control electronics unit, as a chassis monitoring device and/or as a central vehicle control system.

12. Brake system for a vehicle having a control device (48) according to one of Claims 6 to 11.

## Revendications

1. Procédé pour transférer du liquide de freinage dans au moins un cylindre de frein de roue (10) d'un système de freinage d'un véhicule, avec les étapes suivantes :
la commande d'au moins une soupape de commutation (14), par l'intermédiaire de laquelle au moins un circuit de freinage (12) avec l'au moins un cylindre de frein de roue (10) est relié à un maître-cylindre de frein (16) du système de freinage, à un état fermé ;
**caractérisé par**
la réduction d'une force d'amplification (Fv0, Fv1) d'un servofrein (24), laquelle s'exerce sur au moins un piston réglable du maître-cylindre de frein (16), après la commande de l'au moins une soupape de commutation (14) à l'état fermé ;
la commande d'au moins une soupape de commutation de haute pression (20), par l'intermédiaire de laquelle l'au moins un circuit de freinage (12) avec l'au moins un cylindre de frein de roue (10) est relié au maître-cylindre de frein (16), à un état au moins partiellement ouvert après la réduction de la force d'amplification (Fv0, Fv1) du servofrein (24) ; et
l'aspiration de liquide de freinage par l'intermédiaire de l'au moins une soupape de commutation de haute pression (20) au moins partiellement ouverte et le pompage du liquide de freinage dans l'au moins un cylindre de frein de roue (10).

2. Procédé selon la revendication 1, dans lequel, après le pompage de liquide de freinage dans l'au moins un cylindre de frein de roue (10), la force d'amplification (Fv0, Fv1) du servofrein (24) est augmentée.

3. Procédé selon la revendication 2, dans lequel, après l'augmentation de la force d'amplification (Fv0, Fv1) du servofrein (24), on ouvre au moins partiellement l'au moins une soupape de commutation (14).

4. Procédé pour augmenter la pression de freinage dans au moins un cylindre de frein de roue (10) d'un système de freinage d'un véhicule- avec les étapes suivantes :
la détermination d'au moins une grandeur de pression d'admission (66) concernant une pression d'admission (pv0, pv1) existant au moins entre une soupape de commutation de haute pression (20) et un maître-cylindre de frein (16) du système de freinage ;
la comparaison de l'au moins une grandeur de pression d'admission (66) avec au moins une valeur limite (68) ; et
dans la mesure où la grandeur de pression d'admission (66) se situe au-dessus de l'au moins une valeur limite (68), l'augmentation de la pression de freinage dans l'au moins un cylindre de frein de roue (10) par transfert de liquide de freinage dans l'au moins un cylindre de frein de roue (10) conformément au procédé selon l'une des revendications 1 à 3.

5. Procédé pour l'exploitation d'un système de freinage d'un véhicule avec les étapes suivantes :
la détermination d'une grandeur de température (76) et/ou d'une grandeur modèle influençant la température concernant une température existant au niveau d'au moins un cylindre de frein de roue (10), ou à l'intérieur de celui-ci, du système de freinage ;
la comparaison de la grandeur de température (76) et/ou de la grandeur modèle influençant la température déterminée(s) avec au moins une grandeur de comparaison (78) ; et
dans la mesure où la grandeur de température (76) et/ou la grandeur de modèle influençant la température se situe au-dessus de l'au moins une grandeur de comparaison (78), l'augmentation d'une pression de freinage dans l'au moins un cylindre de frein de roue (10) conformément à la revendication 4.

6. Dispositif de commande (48) pour un système de freinage d'un véhicule, avec :
un dispositif de commande de pression de freinage (50) grâce auquel, au moins lorsque le dispositif de commande de pression de freinage (50) se trouve dans un premier mode d'augmentation de pression, il est possible d'émettre au moins un signal de fermeture (52) à au moins une soupape de commutation (14) du système de freinage,
**caractérisé en ce que**
après l'émission de l'au moins un signal de fermeture (52) à l'au moins une soupape de commutation (14), au moins un signal de réduction de force d'amplification (54) peut être émis à un servofrein (24) du système de freinage, après l'émission du signal de réduction de force d'amplification (54) au servofrein (24), au moins un signal de commande d'ouverture partielle (56) pouvant être émis à au moins une soupape de commutation de haute pression (20) du système de freinage, et après l'émission de l'au moins un signal de commande d'ouverture partielle (56) à l'au moins une soupape de commutation de haute pression (20), au moins un signal d'activation (58) pouvant être émis à au moins une pompe (22) du système de freinage de telle sorte qu'au moyen de l'au moins une pompe (22), du liquide de freinage puisse être aspiré via l'au moins une soupape de commutation de haute pression (20) au moins partiellement ouverte et puisse être pompé dans au moins un cylindre de frein de roue (10) du système de freinage.

7. Dispositif de commande (48) selon la revendication 6, dans lequel le dispositif de commande de pression de freinage (50) est en outre conçu pour, après le pompage du liquide de freinage dans l'au moins un cylindre de frein de roue (10), augmenter la force d'amplification (Fv0, Fv1) du servofrein (24).

8. Dispositif de commande (48) selon la revendication 7, dans lequel le dispositif de commande de pression de freinage (50) est en outre conçu pour, après l'augmentation de la force d'amplification (Fv0, Fv1) du servofrein (24), commander l'au moins une soupape de commutation (14) pour qu'elle soit au moins partiellement ouverte.

9. Dispositif de commande (48) selon l'une des revendications 6 à 8, dans lequel le dispositif de commande (48) comprend additionnellement un dispositif d'évaluation de pression d'admission (64) grâce auquel au moins une grandeur de pression d'admission (66) mise à disposition peut être comparée, en ce qui concerne une pression d'admission (pv0, pv1) existant au moins entre la soupape de commutation de haute pression (20) et un maître-cylindre de frein (16) du système de freinage, avec au moins une valeur limite (68) et, dans la mesure où l'au moins une grandeur de pression d'admission (66) se situe au-dessus de l'au moins une valeur limite (68), le dispositif de commande de pression de freinage (50) pouvant être commandé, à partir d'au moins un deuxième mode d'augmentation de pression, au premier mode d'augmentation de pression.

10. Dispositif de commande (48) selon la revendication 9, dans lequel le dispositif de commande (48) comprend additionnellement un dispositif d'évaluation de température (74) grâce auquel une grandeur de température (76) mise à disposition et/ou une grandeur modèle influençant la température mise à disposition, concernant une température existant au niveau de l'au moins un cylindre de frein de roue (10) ou à l'intérieur de celui-ci du système de freinage, peut être comparée avec au moins une grandeur de comparaison (78) et, dans la mesure où la grandeur de température (76) et/ou la grandeur modèle influençant la température (78) se situe au-dessus de l'au moins une grandeur de comparaison (78), un signal d'activation (80) pouvant être émis à au dispositif d'évaluation de pression d'admission (64).

11. Dispositif de commande (48) selon l'une des revendications 6 à 10, dans lequel le dispositif de commande (48) est réalisé en tant qu'appareil de commande ESP, en tant qu'électronique de commande de servofrein, en tant qu'appareil de contrôle de châssis et/ou en tant que système central de commande de véhicule.

12. Système de freinage pour un véhicule avec un dispositif de commande (48) selon l'une des revendications 6 à 11.
